(19) Europäisches Patentamt
European Patent Office
Office européen des brevets

(11) Publication number: **0 158 263**
**A2**

(12) # EUROPEAN PATENT APPLICATION

(21) Application number: 85103952.9

(22) Date of filing: 02.04.85

(51) Int. Cl.⁴: C 08 L 67/02
C 08 L 51/04, C 08 L 51/06
C 08 G 63/76, C 08 L 75/04
C 08 G 18/42, C 08 G 18/10

(30) Priority: 13.04.84 US 600047

(43) Date of publication of application: 16.10.85 Bulletin 85/42

(84) Designated Contracting States: DE FR GB IT NL

(71) Applicant: MOBAY CHEMICAL CORPORATION
Mobay Road
Pittsburgh Pennsylvania 15205-9741(US)

(72) Inventor: Chung, James Y.J.
182 Ridgeview Drive
Wexford Pennsylvania 15090(US)

(72) Inventor: Markusch, Peter H., Dr.
111 Lynbrook Drive
Mc. Murray Pennsylvania 15317(US)

(72) Inventor: Witman, Mark W., Dr.
1856 Taper Drive
Pittsburgh Pennsylvania 15249(US)

(74) Representative: Gremm, Joachim, Dr. et al,
Bayer AG Konzernverwaltung RP Patentabteilung
D-5090 Leverkusen, Bayerwerk(DE)

(54) **Thermoplastic polyester molding compositions having an improved impact performance.**

(57) A thermoplastic molding composition comprising the extrudate of a blend of a thermoplastic polyester, a rubber-elastic impact modifying compound and a certain blocked (capped) polyisocyanate prepolymer is disclosed characterized in that it has an improved level of impact strength.

EP 0 158 263 A2

Croydon Printing Company Ltd

# THERMOPLASTIC POLYESTER MOLDING COMPOSITIONS HAVING AN IMPROVED IMPACT PERFORMANCE

## FIELD OF THE INVENTION

The present invention relates to thermoplastic molding compositions and more particularly to impact modified thermoplastic polyester compositions, to a process for the production thereof and to the use of said compositions for manufacturing molded articles.

## SUMMARY OF THE INVENTION

The relevant prior art is noted to include U.S. Patent 4,096,202 wherein disclosed are blends of polyalkylene terephthalate containing a crosslinked acrylic-phase-based multiphase composite, the composition being characterized in its improved impact strength. U.S. 3,864,428 is noted to disclose impact strength improvement imparted to an aromatic polyester/polycarbonate molding composition by the incorporation of a certain graft copolymer of a butadiene polymer/vinyl monomer therewith.

Core shell polymeric compounds having a butadiene-based core are taugth in U.S. 4,180,494 to improve the impact performance of compositions comprising an aromatic polyester and an aromatic polycarbonate. Also of relevance is U.S. 3,769,260 wherein disclosed are thermoplastic molding compositions containing linear saturated polyesters and certain α-olefin polymers. Blocked (capped) polyurethanes of the type useful in the present context have been disclosed in U.S. Patent 4,292,266.

## Detailed Description of the Invention

In the practice of the invention, thermoplastic molding compositions are prepared by extruding a mixture comprising a blend of a thermoplastic polyester and an impact modifier and further comprising an additive amount of at least one blocked (capped) polyurethane prepolymer. The blend containing the incidated resins, i.e. (i) thermoplastic polyester and (ii) impact modifier, is characterized in that the relative amounts of these constituents are 70 to 95, preferably 75 to 90, percent of thermoplastic polyester and 5 to 30, preferably 10 to 25, percent of the impact modifier, the percentages being by weight, calculated in relation to the sum of components (i) and (ii). The blend is further characterized in that it contains an additive amount, preferably 0.5 to 8.0, more preferably 1.0 to 5.0, percent, by weight, relative to the weight of components (i) + (ii) of a blocked (capped) polyurethane prepolymer, said amount being sufficient to impart to the extrudate an improved level of impact strength.

The thermoplastic extrudate of this invention may be prepared by uniformly mixing the components on an extruder. The blend can be extruded at rear to front temperatures of from 200 to 330°C, preferably from 230 to 310°C, and more preferably from 250 to 290°C. The extrudate can be pelletized in a known manner, and is suitable for injection molding into a variety of useful articles. The composition may contain additives such as are well known in the art including stabilizers, mold release agents, crystallization promoters, dyes and

pigments. flame retardants as well as fillers and reinforcing agents, including glass fibers, at an amount of 10 to 40 % by weight, relative to the weight of the molding composition.

The thermoplastic polyesters of the blends in accordance with the invention are characterized in that their intrinsic viscosity (I.V.) is at least 0.4 and preferably 0.5 to 1.6 dl/gm, more preferably 0.6 to 1.2 dl/gm, measured as a 1 % by weight solution in a 60:40 (by weight) mixture of phenol and tetrachloroethane at 30°C. These polyesters are available commercially or can be prepared by known means such as by the alcoholysis of dialkyl esters of at least one dicarboxylic acid with glycols followed by polycondensation, by heating the glycols with the free dicarboxylic acids or with their dihalides and similar processes such as are described among others in U.S. Patents 2,465,319 and 3,047,539, both incorporated herein by reference.

The preferred thermoplastic polyesters in the present context are polyethylene terephthalate, PET, polybutylene terephthalate, PBT, mixtures and copolymers thereof.

The dicarboxylic acid component of the thermoplastic polyester (i) consists mainly of terephthalic acid units and may contain up to 10 mol %, based on the dicarboxylic acid units, of units of other aromatic or of ar-aliphatic dicarboxylic acids having from 8 to 16 carbon atoms, of aliphatic dicarboxylic acids having from 4 to 8 carbon atoms or of cycloaliphatic dicarboxylic acids having from 8 to 12 carbon atoms. Examples

of such dicarboxylic acids which may be co-condensed with terphthalic acid are phthalic acid, isophthalic acid, naphthalene-2,6-dicarboxylic acid, diphenyl-4,4'-dicarboxylic acid, adipic acid, sebacic acid and cyclohexanediacetic acid.

The diol component of the thermoplastic polyester (i) consists mainly of ethylene glycol and/or butane diol-1,4. It may, however, contain up to 10 mol %, based on the glycol units, of units of aliphatic diols having 3 or from 5 to 12 carbon atoms, of cycloaliphatic diols having from 6 to 15 carbon atoms or of aromatic or of ar-aliphatic diols having from 6 to 21 carbon atoms. Examples of such additional diols ("codiols") include propane-1,3-diol, pentane-1,5-diol, hexane-1,6-diol, decamethylene glycol, cyclohexane diols, or cyclohexane-1,4-dimethanol, 3-methyl-pentanediol-(2,4), 2-methylpentanediol-(1,4), 2,2,4-trimethylpentanediol-(1,3), 2-ethylhexanediol-(1,3), 2,2-diethyl propanediol-(1,3), 2-ethylhexanediol-(1,3), 2,2-diethyl propanediol-(1,3), hexanediol-(1,3), 1,4-di-(β-hydroxyethoxy)-benzene, 2,2-bis-(4-hydroxycyclohexyl)-propane, 2,4-dihydroxy-1,1,3,3-tetramethyl-cyclobutane, 2,2-bis-(3-β-hydroxyethoxyphenyl)-propane and 2,2-bis-(4-hydroxypropoxyphenyl)-propane.

The thermoplastic polyesters (i) can be branched by co-condensing relatively small amounts of trihydric or tetrahydric alcohols or tribasic or tetrabasic acids, as described in German Offenlegungsschrift No. 1,900.270 and in U.S. Patent No. 3,692,744. Examples of suitable branching agents include trimellitic acid,

trimesic acid, pyromellitic acid, trimethylolpropane and -ethane, and pentaerythritol. It is advisable not to use more than 1 mol % of branching agent, based on the quantity of dicarboxylic acid component.

Polyethylene terephthalates derived mainly from terephthalic acid (or its derivatives) and ethylene glycol are preferred and homopolyethylene terephthalate, i.e. a product produced substantially only from ethylene glycol and terephthalic acid or its esters or its dichloride, is most preferred.

Polybutylene terephthalates derived mainly from terephthalic acid (or its derivatives such as its esters or its dichloride) and butane diol-1.4 are also preferred, and homobutylene terephthalate, i.e. a product produced substantially only from butane diol-1.4 and terephthalic acid or its esters or its dichloride, is most preferred.

Furthermore, mixtures of from 20 to 80 % by weight of polyethylene terephthalate and from 80 to 20 % by weight of polybutylene terephthalate (based on the sum of polyethylene terephthalate and polybutylene terephthalate) are preferred.

Copolyesters consisting of terephthalic units and from 20 to 80 % by weight of ethylene glycol units and from 80 to 20 % by weight of butane diol-1.4-units are also preferred.

Impact Modifier

In the context of the invention, impact modifiers are rubbery compounds characterized in that their glass transition temperatures is below 20°C, preferably

below 0°C and further in their compatibility with the thermoplastic polyester wherein they are incorporated; a compatible impact modifier in the present context is one capable of forming a substantially uniform dispersion in the thermoplastic polyester (i), which capability is referred to here as compatibility. The term rubbery compounds in the present context is understood to include natural rubbers and synthetic rubbers. Suitable synthetic rubbers include polyurethane rubber, ethylene/vinyl acetate rubber, silicone rubber and polyether rubber, acrylate rubber, polypentenamer rubber and ethylene-propylene-diene rubbers as well as diene rubbers, i.e. homopolymers of conjugated dienes having 4 to 8 carbon atoms such as butadiene, isoprene, piperylene and chloroprene, copolymers of such dienes including copolymers of such dienes with styrene, acrylic or methacrylic acids or derivatives thereof (e.g. acrylonitrile, methacrylonitrile, acrylic acid, methacrylic acid, butyl acrylate and methyl methacrylate) or isobutylene. Butadiene, butadiene/styrene, butadiene/methyl methacrylate, butadiene/butyl acrylate, ethylene/propylene/diene, polypentenamer, butadiene/acrylonitrile and acrylate rubbers are particularly preferred. In a particularly preferred embodiment, the rubbery phase is at least partially crosslinked.

The rubbery compounds of the invention are preferably graft copolymers obtained by polymerizing certain monomers in the presence of the rubber. The certain monomers are:

(1) styrene and its derivatives such as α-methylstyrene, α-chlorostyrene, p-chlorostyrene, 2,4-dichlorostyrene, p-methylstyrene, 3,4-dimethylstyrene, o- and p-divinyl benzene, p-methyl-α-methylstyrene and p-chloro-α-methylstyrene;

(2) acrylic and methacrylic acids as well as nitriles and esters based thereon, preferably $C_1$-$C_{18}$ alkyl esters such as acrylic and methacrylic acid, acrylonitrile, methacrylonitrile, methyl acrylate, ethyl acrylate, n-propyl and isopropyl acrylate, n-butyl and isobutyl acrylate, 2-ethylhexyl acrylate, methyl methacrylate, ethyl methacrylate, n-propyl and isopropyl methacrylate, n-butyl and isobutyl methacrylate, cyclohexyl methacrylate and isobornyl methacrylate;

(3) maleic acid anhydride;

The graft copolymers may be obtained by polymerizing monomers from group (1) or group (2) or both groups (1) and (2) in the presence of the rubbers as mentioned above, optionally also with (3).

Particularly preferred groups of such graft polymers are obtained by polymerizing (a) styrene, α-methyl styrene or mixtures thereof, (b) 0-50 % by weight (based on total monomers) of the above-mentioned styrene derivatives in the presence of butadiene, butadiene/styrene, butadiene/methyl methacrylate, butadiene/butyl acrylate, ethylene/propylene/diene, polypentenamer or butadiene/acrylonitrile rubbers (which may also contain in copolymerized form small amounts of other monomers). Other particularly preferred graft copolymers are obtained by polymerizing 30-95 % by

weight of styrene and/or one of the above-mentioned styrene derivatives and 5-70 % by weight of the above-mentioned acrylic and/or methacrylic compounds (% by weight based on the sum of monomers) in the presence of the above-mentioned rubbers.

Among the particularly preferred graft polymers, those which are obtained by polymerizing styrene or by polymerizing 20-95 % by weight of styrene and 5-80 % by weight of α-methyl styrene (% by weight based on the sum on monomers) or 30-95 % by weight of styrene and/or α-methyl styrene and 5-70 % by weight of acrylonitrile and/or methacrylonitrile and/or methyl methacrylate (% by weight based on the sum of monomers) in the presence of the above-mentioned rubbers are particularly important.

A yet additional preferred embodiment is represented by the use of a grafted polyacrylate rubber which can be made following known procedures. In general, any of the polyalkyl acrylates described in U.S. Patent No. 3,591,659, incorporated by reference herein, can be used, especially those containing units derived from n-butyl acrylate. Preferably, the polyacrylate resin will be in the form of a rubber-elastic graft copolymer having a glass transition temperature below 20°C as described in Schlichting et al, U.S. Patent No. 4,022,748, incorporated by reference herein. Most preferably, the polyacrylate will comprise a multiple stage polymer having a rubbery first stage and a thermoplastic rigid final stage, as described in U.S. Patent Nos. 4,096,202 and 3,808,180, both incorporated herein by

reference. Briefly, the technology decribed in U.S. 4,096,202 is that of the preparation of a specific class of multiphase compounds. These are compositions comprising about 25 to 95 % by weight of a first elastomeric phase and about 75-5 % by weight of a second, rigid, thermoplastic phase. The first phase is polymerized from about 75 to 99.8 % by weight $C_1$ to $C_6$ alkyl acrylate resulting in an acrylic rubber core having a glass transition temperature below about 10°C which is crosslinked with 0.1 to 5 % by weight of a crosslinking monomer and to which is added 0.1 to 5 % by weight of a graft-linking monomer, relative to the weight of rubbery plus rigid stage.

The preferred alkyl acrylate is butyl acrylate. The crosslinking monomer is a polyethylenically unsaturated monomer having a plurality of addition polymerizable reactive groups all of which polymerize at substantially the same rate of reaction. Suitable crosslinking monomers inlcude polyacrylic and polymethacrylic esters of polyols such as butylene diacrylate and dimethacrylate, trimethylol propane trimethacrylate and the like; di- and trivinyl benzene, vinyl acrylate and methacrylate, and the like. The preferred crosslinking monomer is butylene diacrylate. The graftlinking monomer is a polyethylenically unsaturated monomer having a plurality of addition polymerizable reactive groups, at least one of which polymerizing at a substantially different rate of polyermization from at least one other of said reactive groups. The function of the graft-linking monomer is to provide a residual

level of unsaturation in the elastomeric phase, particularly in the latter stages of polymerization and consequently at or near the surface of the elastomer particles. The preferred graft-linking monomers are allyl methacrylate and diallyl maleate.

The final stage monomer system comprises at least one of alkyl methacrylate (preferably $C_1$-$C_{16}$ alkyl methacrylate), styrene, acrylonitrile, $C_1$-$C_{16}$ alkyl acrylates, and the like, and is characterized in that the glass transition temperature of its polymerized form is at least 20°C. Preferably, the final stage monomer system is at least 50 weight % $C_1$ to $C_4$ alkyl methacrylate. It is further preferred that the final stage polymer be free of units which tend to degrade poly(alkylene terephthalate); for example, acid, hydroxyl amino and amide groups.

A certain such acrylic rubber interpolymer composite characterized in that the acrylic rubber core is comprised of n-butyl acrylate and in that its crosslinking agent is 1,3-butylene diarylate and in which the graftlinking agent is diallyl maleate and the second phase monomeric system of which is methyl methacrylate, said components relating by weight to 79.2/0.4/0.4/20.0, is available in commerce.

Blocked (Capped Polyisocyanate Prepolymers

Polyisocyanate prepolymers suitable in their end capped configuration as a synergist in the present invention are generally described in U.S. 4,292,226, incorporated herein by reference. Further, in the present context. the term "prepolymer" includes adducts within its scope.

Accordingly, suitable starting materials for producing the NCO-prepolymers are:

1. Any organic polyisocyanates, preferably diisocyanates, corresponding to the formula

$$Q\ (NCO)_{\underline{n}}$$

in which

$\underline{n}$ = 2 to 4, preferably 2, and

Q represents a saturated aliphatic hydrocarbon radical containing from 2 to 18, preferably from 6 to 10 carbon atoms, a saturated cycloaliphatic hydrocarbon radical containing from 4 to 15, preferably from 6 to 10 carbon atoms, an aromatic hydrocarbon radical containing from 6 to 15, preferably from 6 to 13 carbon atoms or an arylaliphatic hydrocarbon radical containing from 8 to 15, preferably from 8 to 13 carbon atoms, at least 2 carbon atoms being arranged between the NCO-groups in each case.

Examples of preferred polyisocyanates, particularly diisocyanates, are tetramethylene diisocyanate, hexamethylene diisocyanate, dodecamethylene diisocyanate, cyclobutane-1,3-diisocyanate, cyclohexane-1,3- and -1,4-diisocyanate and mixtures of these isomers, 1-isocyanato-3,3,5-trimethyl-5-isocyanatomethyl cyclohexane (IPDI), 2,4- and 2,6-hexahydrotoluene diisocyanate and mixtures of these isomers, hexahydro-1,3- and/or 1,4-phenylene diisocyanate, perhydro-2,4'- and/or -4,4'-diphenyl methane diisocyanate, 1,3- and 1,4-bis-(isocyanatomethyl)-cyclohexane and 1,3- and 1,4-bis-(2-isocyanato-2-propyl)-benzene, 1,3- and 1,4-phenylene

diisocyanate. 2,4- and 2,6-toluene diisocyanate and mixtures of these isomers, diphenyl methane-2,4'- and/or -4,4'-diisocyanate and naphthalene-1,5-diisocyanate. It is of course also possible to use mixtures of these isocyanates. Small quantities of mono- and triisocyanates may also be used. It is also possible to use the modified polyisocyanates known per se in polyurethane chemistry, i.e. polyisocyanates containing for example carbodiimide groups, allophanate groups, isocyanurate groups, urethane groups and/or biuret groups, in the process according to the invention, although this is not preferred.

Preferred polyisocyanates are hexamethylene diisocyanate, 1-isocyanato-3,3,5-trimethyl-5-isocyanatomethyl cyclohexane, diphenyl methane-4,4'-diisocyanate, dicyclohexyl methane-4,4'-diisocyanate, 2,4- and 2,6-toluene diisocyanate and mixtures thereof.

2. Any organic compounds containing at least two isocyanate-reactive groups, more particularly organic compounds containing a total of two amino groups, thiol groups, carboxyl groups and/or hydroxyl groups and having molecular weights (weight average) in the range from about 61 to 10,000 and preferably in the range from about 300 to 4,000. The corresponding dihydroxyl compounds are preferably used. The use of compounds with a functionality of three of higher in the isocyanate polyaddition reaction in small quantities in order to obtain a certain degree of branching is also possible, as is the above-mentioned possible use of trifunctional or more highly functional polyisocyanates for the same purpose.

Preferred hydroxyl compounds are the hydroxy polyesters, hydroxy polyethers, hydroxy polythioethers, hydroxy polyacetals, hydroxy polyolefins, hydroxy polbutadiene, hydroxy polycarbonates and/or hydroxy polyester amides known per se in polyurethane chemistry.

Suitable polyesters containing hydroxyl groups are, for example, reaction products of polyhydric, preferably dihydric and, optionally, trihydric alcohols with polybasic, preferably dibasic, carboxylic acids. Instead of using a free polycarboxylic acid, it is also possible to use the corresponding polycarboxylic acid anhydrides or corresponding polycarboxylic acid esters of lower alcohols or mixtures thereof for producing the polyesters. The polycarboxylic acids may be aliphatic, cycloaliphatic, aromatic and/or heterocyclic and may be substituted, for example by halogen atoms, and/or unsaturated. Examples of polycarboxylic acids such as these are succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, glutaric acid anhydride, maleic acid, maleic acid anhydride, fumaric acid, dimeric and trimeric fatty acids, such as oleic acid, which may be used in admixtures with monomeric fatty acids, terephthalic acid dimethylester, terephthalic acid-bis-glycol ester. Suitable polyhydric alcohols are for example ethylene glycol, 1,2- and 1,3-propylene glycol, 1,4- and 1,3-butylene glycol, 1,6-hexane diol, 1,8-octane diol, neopentyl glycol,

1,4-bis-(hydroxymethyl)-cyclohexane, 2-methyl-1,3-propane diol, glycerol, trimethylol propane, 1,2,6-hexane triol, 1,2,4-butane triol, trimethylol ethane, pentaerythritol, quinitol, mannitol and sorbitol, methyl glucoside, also diethylene glycol, triethylene glycol, tetraethylene glycol, polyethylene glycols, dipropylene glycol, polypropylene glycols, dibutylene glycol and polybutylene glycols. The polyesters may contain terminal carboxyl groups. Polyesters of lactones, for example ε-caprolactone, or hydroxy carboxylic acids, for example ω-hydroxy caproic acid, may also be used.

The polyethers suitable for use in accordance with the invention, preferably containing two hydroxyl groups are also known per se and are obtained for example by polymerizing epoxides, such as ethylene oxide, propylene oxide, butylene oxide, tetrahydrofuran, styrene oxide or epichlorohydrin, on their own, for example, in the presence of boron trifluoride, or by the addition of these epoxides, either in admixture or successively, with starting components containing reactive hydrogen atoms, such as alcohols and amines, for example water, ethylene glycol, 1,3- or 1,2-propylene glycol, 4,4'-dihydroxy diphenyl propane or aniline.

Polyethers modified by vinyl polymers of the type formed for example by polymerizing styrene, acrylonitrile in the presence of polyethers as described in U.S. Patent Nos. 3,383,511; 3,304,273; 3,523,093; and 3,110,695, all incorporated herein by reference and German Patent No. 1,151,536 are also suitable. The more highly functional polyethers which may also be proportionately used are similarly obtained in known manner by alkoxylating starter molecules of relatively high functionality, for example, ammonia, ethanolamine, ethylene diamine or sucrose.

Among the polythioethers, particular reference is made to the condensation products of the thiodiglycol on its own and/or with other glycols, dicarboxylic acids, formaldehyde, aminocarboxylic acids or aminoalcohols. Depending on the co-components, the products in question are polythio mixed ethers, polythio ether esters, polythio ether ester amides.

Suitable polyacetals are, for example, the compounds obtainable from glycols, such as diethylene glycol, triethylene glycol, 4,4'-diethoxy diphenyl dimethyl methane, hexane diol and formaldehyde. Polyacetals suitable for use in accordance with the invention may also be obtained by polymerizing cyclic acetals.

Suitable polycarbonates containing hydroxyl groups are known per se and may be obtained for example by reacting diols, such as 1,3-propane diol, 1,4-butane diol and/or 1,6-hexane diol, diethylene glycol, triethylene glycol, tetraethylene diol, with diaryl carbonates, for example diphenyl carbonate, or phosgene.

The polyester amides and polyamides include for example the predominantly linear condensates obtained from polybasic saturated and unsaturated carboxylic acids or their anhydrides and polyhydric saturated and unsaturated amino alcohols, diamines, polyamines and their mixtures. Polyhydroxyl compounds

already containing urethane or urea groups may also be used.

It is also possible to use low molecular weight polyols such as, for example, ethane diol, 1,2- and 1,3-propane diol, 1,4- and 1,3-butane diol, pentane diols, hexane diols, trimethylol propane, hexane triols, glycerol and pentaerythritol. Monofunctional alcohols, such as stearyl alcohol for example, may also be used in small quantities.

Representatives of the above-mentioned polyisocyanate and hydroxyl compounds suitable for use in the process according to the invention are described, for example, in High Polymers, Vol. XVI, "Polyurethanes, Chemistry and Technology" by Saunders-Frisch, Interscience Publishers, New York, London, Volume I, 1962, pages 32 to 42 and pages 44 to 54, and Volume II, 1964, pages 5 to 6 and 198 to 199, and also in Kunststoff-Handbuch, Volume VII, Vieweg-Höchtlen, Carl-Verlag, Munich, 1966, for example on pages 45 to 71.

Further, U.S. 3,756,992 and U.S. 3,479,310 both incorporated herein by reference provide added information respecting the preparation of suitable polyurethane prepolymers which upon capping are useful in the present context.

Preferred polyurethane prepolymers have an average isocyanate functionality of from 1.8 to 2.2 and a number average molecular weight of from 500 to 20,000, preferably from 800 to 9,000.

Capped, or blocked, isocyanates are described, for instance in Polyurethanes, Chemistry and Technology

by Saunders and Frisch, 1962, incorporated by reference herein - see especially pages 118-121 and in New Developments in the Field of Blocked Isocyanates II by Zeno W. Wicks, Jr., Polymers and Coatings Department, North Dakota State University, Fargo, North Dakota, Prog. Org. Coat., 1981 9(1) 3-28, incorporated herein by reference.

Blocking agents suitable for use in the process according to the invention are, in particular, compounds with preferably one isocyanate-reactive group which enter into an addition reaction with organic isocyanates at temperatures above 50°C and preferably at temperatures in the range of from 60°to 100°C, and whose resulting addition products, in admixture with involatile polyols containing primary hydroxyl groups, react with the involatile polyols to form urethanes at temperatures in the range of from 100° to 200°C, the reaction being accompanied by liberation of the blocking agent. Suitable blocking agents of this type are, for example, secondary or tertiary alcohols, such as isopropanol or tert.-butanol, C-H-acid compounds, such as malonic acid dialkyl esters, acetyl acetone, acetoacetic acid alkyl esters, oximes, such as formaldoxime, acetaldoxime, methyl ethyl ketone oxime, cyclohexanon oxime, acetophenone oxime, benzophenone oxime or diethyl glyoxime, lactams, such as ε-caprolactam, δ-valerolactam, γ-butyrolactam, phenols, such as N-methyl acetamide, imides, such as phthalimide, imidazole, alkali metal bisulphites and trialkyl ammonium bisulphites.

The preferred blocking (or capping) agents are cyclic 1,3-diketone, for example 1,3-cyclohexanedione.

hydroxamic acid ester, benzotriazole, imidazole oxime, for example 2-butanone oxime, alcohol, phenol, hydroxy substituted nitrogen compounds such as n-hydroxy phthalimide, in particular ε-caprolactam.

A particularly preferred blocked (capped) prepolymer is an ε-caprolactam capped TDI-polyurethane prepolymer.

EXAMPLES

The preparation of an ε-caprolactam capped TDI-polyisocyanate prepolymer suitable in the present context was carried out as follows:

The polyol components (302 parts by weight of a 2000 avg. MW difunctional polypropylene oxide, 157 parts by weight of a 3000 avg. MW - glycerin initiated trifunctional polypropylene oxide and 232.3 parts of weight of a 48000 avg. MW glycerin initiated polyether polyol containing both propylene oxide and ethylene oxide) and 1.66 parts by weight of trimethylol propane and 106.8 parts of TDI (a mixture of 80 % of 2,4-isomer and 20 % of the 2,6-isomer) were mixed and heated with continued stirring to 70-75°C. The mixture was allowed to react until the NCO content was just below the theoretical level (3.0 %) which reaction took about 7 hours. 81.4 parts by weight of ε-caprolactam were then charged and the mixture was heated with stirring to 80-85°C and allowed to react until no free isocyanate was detected by infrared spectroscopy, which reaction time was about 8 hours. The product was characterized in that its blocked NCO content was 2.6 % and its viscosity, at 25°C was 55,000 mPa.s.

Examples

Compositions in accordance with the present invention were prepared and their properties determined. The preparation procedure entailed first drying the powdery components overnight at 85°C, followed by blending (Welex at 1800 rpm for 4 minutes) and extrusion (1 1/2" Hartig, 2.75:1 compression ratio, screw speed 80 rpm, screen pack 20-40-60, at temperature profile of (°C):

| | |
|---|---|
| rear | 271 |
| middle | 271 |
| front | 271 |
| die | 238. |

Injection molding was carried out (Newbury, 4 oz.) under the conditions below:

| | | |
|---|---|---|
| zone set temperature | rear | 260°C |
| | front | 260°C |
| | nozzle | 254°C |
| | mold | 90°C |
| cycle time (seconds) | injection | 10 |
| | cooling | 25 |
| | total | 35 |
| injection pressure | 76 bar | |

The table below is a summary of the results obtained upon the testing of compositions in accordance with the invention. Based on poly(ethylene terephthalate) resin (I.V. = 1.04 dl/gm) all the compositions contained about 3.3 percent of talc as an nucleating agent and about 0.8 percent of octadecyl-3-(3',5'-di-tert.-butyl-4-hydroxyphenyl) propionate as an antioxidant; the composition numbered 3 contained also about

0.8 percent of tris-[(3-ethyl-oxetanyl-3)-methyl]-phosphite. a thermal stabilizer; the percentages are in relating to the weight of PET. Neiter the antioxidant nor the thermal stabilizer is believed critical to the invention. Talc is not a necessary component in the composition of the invention as any of the agents known in the art to cause nucleation in the polyester component are suitable.

| Composition | 1 | 2 | 3 | 4 |
|---|---|---|---|---|
| PET. % | 75.0 | 75.0 | 75.0 | 75.0 |
| Impact modifier. % | | | | |
| A(1) | 25.0 | 25.0 | - | - |
| B(2) | - | - | 25.0 | 25.0 |
| Blocked Polyisocyanate Prepolymer, %(3) | 0 | 5 | 0 | 5 |
| Flexural strength. [Pa] | 61.1 | 54.9 | 61.8 | 48.1 |
| Flexural modulus, [Pa] | 0.17 | 0.18 | 0.19 | 0.17 |
| Heat Deflection Temperature, [°C] at 18.5 bar | 76 | 73 | 73 | 75 |
| Impact Strength, Notched Izod (3.2 mm) [J/m] | | | | |
| as molded | 171 | 988 | 192 | >860 |
| after heating(4) | 144 | >625 | 133 | 737 |

(1) A = a core/shell structure based on butyl acrylate rubbery phase grafted with methyl methylacrylate:

(2) B = SAN grafted onto acrylic rubber characterized in that it contains 80 % polybutyl acrylate (Tg <30°C) and in that the weight ratio of S/AN is 72/28.

(3) ε-caprolactam capped TDI-polyisocyanate prepolymer; added at the indicated level; % means parts per hundred parts of resin (PET plus impact modifier).

(4) heating at 130°C for 30 minutes.

Compositions in accordance with the invention were prepared demonstrating the applicability of the concept in glass fibers reinforced systems. The preparation of the molding compositions entailed blending of the components and extrusion (2" vented extruder; temperature profile - rear to front; °C - 280, 280, 270, 260, 250, 270, 270, compression ratio 2.75:1, screw speed 90 rpm). Injection molding of the samples was carried out using a Newbury 4 oz. machine, at the following molding conditions:

| | | |
|---|---|---|
| zone set temperature | rear | 260°C |
| | front | 260°C |
| | nozzle | 254°C |
| | mold | 131°C |
| cycle time | 25 seconds | |

The compositions were based on poly(ethylene-terephthalate) having an inherent viscosity of 0.6 dl/gm as measured as a 0.5 % solution in a 60 % phenol/40 % tetrachloroethane solvent at 25°C and all contained 2.0

percent of talc. 0.5 percent of an epoxide, 0.2 percent of an antioxidant (octadecyl-3-(3',5'-di-tert.-butyl-4-hydroxyphenyl)propionate), 0.1 percent of a thermal stabilizer (tris-[(3-ethyloxetanyl-3)methyl]-phosphite) and 0.1 percent of a hydrolysis stabilizer conforming structurally to

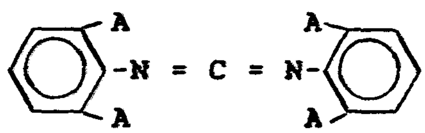

where A is

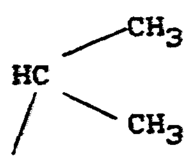

Further. all the compositions contained 30 percent of glass fibers (10 microns in diameter). The blocked polyisocyanate prepolymer used in these examples is ε-caprolactam capped TDI-polyisocyanate prepolymer as described above and the impact modifiers were: A = described above and C = a polybutadiene 75 %, grafted with SAN. 25 %, S/AN weight ratio 72/28.

The table below describes the compositions in terms of their components (the percents are by weight) and their respective impact strength:

| | Control 1 | Control 2 | 1 | 2 |
|---|---|---|---|---|
| PET | 64.9 | 64.9 | 60.4 | 60.4 |
| glass fibers | 30.0 | 30.0 | 30.0 | 30.0 |
| Thermal Stabilizer | 0.1 | 0.1 | 0.1 | 0.1 |
| Hydrolysis Stabilizer | 0.1 | 0.1 | 0.1 | 0.1 |
| Antioxidant | 0.2 | 0.2 | 0.2 | 0.2 |
| Epoxide | 0.5 | 0.5 | 0.5 | 0.5 |
| Talc | 0.2 | 0.2 | 0.2 | 0.2 |
| Impact Modifier-A | 4.0 | - | 4.0 | - |
| Impact Modifier-C | - | 4.0 | - | 4.0 |
| Blocked Polyisocyanate Prepolymer | - | - | 4.8 | 4.8 |
| 3.2 mm Izod Impact (J/m) Notched | 114 | 117 | 154 | 158 |

Naturally, modifications and/or variations of the presently disclosed invention are possible in light of the above disclosure. It should however be understood that such are within the scope of the invention as defined by the following claims.

WHAT IS CLAIMED IS:

1. A thermoplastic molding composition comprising the extrudate of a blend of

(i) 70-95 percent by weight of a thermoplastic polyester, and

(ii) 5-30 percent by weight of an impact modifier, the glass transition temperature of its elastomeric phase being below 20°C, said percent being relative to the sum (i) + (ii), and 0.5 to 8 % by weight of a blocked polyisocyanate prepolymer said percent being relative to the sum (i) + (ii).

2. The molding composition of Claim 1 wherein said polyisocyanate prepolymer is derived from (a) an organic polyisocyanate corresponding to the formula

$$Q(NCO)_n$$

wherein n is 2-4 and Q denotes a $C_2$-$C_{18}$ saturated aliphatic hydrocarbon radical, a $C_4$-$C_{15}$ saturated cyloaliphatic hydrocarbon radical or a $C_6$-$C_{15}$ aromatic hydrocarbon radical or a $C_8$-$C_{15}$ arylaliphatic hydrocarbon radical with the proviso that at least 2 carbon atoms are present between the NCO groups in each case and (b) an organic compound containing at least two isocyanate-reactive groups characterized in that its molecular weight is from 60 to 10,000.

3. The molding composition of Claim 2 wherein said isocyanate-reactive groups is selected from the group consisting of amino, thiol, carboxyl and hydroxyl radicals.

4. The molding composition of Claim 2 wherein said (b) is a hydroxyl compound selected from the group consisting of hydroxy polyester, hydroxy polyethers, hydroxy polyolefins, hydroxy polybutadienes, hydroxy polycarbonates and hydroxy polyester amides.

5. The molding composition of Claims 1 to 4 wherein said impact modifier (ii) is selected from the group consisting of a graft polymer of butadiene and a polyacrylate rubber.

6. The molding composition of Claims 1 to 5 wherein said prepolymer is ε-caprolactam blocked.

7. The molding composition of Claims 1 to 6 wherein said thermoplastic polyester is polyethylene terephthalate, polybutylene terephthalate, a mixture or a copolymer thereof.

8. The molding composition of Claims 1 to 7, wherein said prepolymer is a blocked TDI-polyurethane prepolymer.

9. The molding composition of Claims 1 to 8, further comprising glass fibers at an amount of 10 to 40 percent relative to the weight of the composition.

10. A process for preparing the compositions of Claims 1 to 9 by extruding a blend containing components (i), (ii) and the blocked polyisocyanate prepolymer at temperatures from 200 to 330°C.

11. Use of the compositions of Claims 1 to 9 for manufacturing molded articles.

12. The blend comprising components (i), (ii) and the blocked polyisocyanate prepolymer.